# FASCICULE DE BREVET EUROPEEN

(11) **EP 0 727 401 B1**
(45) Date de publication et mention de la délivrance du brevet: **31.05.2000**
(21) Numéro de dépôt: 96450004.5
(22) Date de dépôt: 14.02.1996
(51) Int. Cl.: C04B 35/83

(54) **Procédé de fabrication de pièces en forme en matériau composite carbone/carbone graphité et pièces ainsi obtenues**
Verfahren zur Herstellung von Formteilen aus graphitiertem Kohlenstoff/Kohlenstoff-Verbundwerkstoff und so erhaltene Teile
Method of making shaped articles of graphitized carbon/carbon composite material and articles obtained thereby

(30) Priorité: 17.02.1995 FR 9502063
(43) Date de publication de la demande: 21.08.1996
(73) Titulaire: AEROSPATIALE Société Nationale Industrielle, 75781 Paris Cédex 16 (FR)
(72) Inventeur: Darrieux, Jean-Louis, 33160 Saint Médard en Jalles (FR); Donzac, Jean-Marc N.P., 33480 Sainte Hélène (FR)
(74) Mandataire: Thébault, Jean-Louis

(56) Documents cités:
- EP-A- 0 558 417
- FR-A- 2 143 124
- CARBON, vol. 31, no. 5, 1993, OXFORD,GB, pages 731-750, XP000397372 K. CHRIST ET AL.: "Carbon-fiber-reinforced carbon composites fabricated with mesophase pitch"

## Description

La présente invention a trait à la fabrication de pièces en forme destinées à supporter des contraintes thermodynamiques très élevées et constituées de fibres discontinues de carbone noyées dans une matrice de carbone.

De telles pièces sont particulièrement utilisées dans le domaine aéronautique et spatial pour constituer par exemple des tuyères, des disques de frein, des aubes de turbine, des ailerons, des bords d'attaque, etc...

On connaît diverses techniques permettant d'obtenir ce type de pièces par moulage par pressage à chaud d'un mélange de fibres de carbone et de précurseurs de carbone.

Ainsi, par le document EP-A-0.402.915 on sait mélanger des fibres de carbones multidirectionnelles de différentes longueurs, des charges de graphite et des mésophases de brai pour préparer un demi-produit moulable en l'état et graphitable et servant à réaliser des pièces planes, en particulier des disques de friction.

Toutefois, cette technique est délicate à maîtriser. En particulier, l'étape de malaxage et mélangeage des fibres, dont la longueur est variable et comprise entre 5 et 50 mm, peut entraîner des ruptures de filaments.

De plus et surtout, l'obtention d'un matériau homogène nécessite des opérations délicates pour imprégner les faisceaux de fibres afin d'obtenir un composite homogène, c'est-à-dire sans zone dépourvue de fibres ou présentant des occlusions gazeuses.

Le document EP-A-0.558.417 décrit par ailleurs la réalisation d'un mélange à mouler sous forme de tronçons contenant la fibre de carbone et une mésophase de brai et placés dans un moule de pressage à chaud de façon que leur axe longitudinal soit perpendiculaire à l'axe de pressage. De tels composites carbone/carbone ne sont traités qu'à une température inférieure à 1 200°C et ne sont pas graphitables car le traitement auquel sont soumises les fibres ne le permet pas.

En outre, l'alignement des fibres est unidirectionnel et la longueur des fibres utilisables est limitée par les dimensions de la section de pressage.

Enfin, ce procédé conduit à l'obtention d'une ébauche qu'il faut usiner, ce qui entraîne un endommagement des fibres et donc un amoindrissement des performances mécaniques.

La présente invention a pour but de proposer une nouvelle technique de fabrication de pièces mécaniques en matériau composite utilisant des fibres de carbone de haute performance, densifiées par pressage à chaud de précurseurs de carbone, permettant de remédier aux inconvénients mentionnés ci-dessus.

En particulier, l'invention vise à obtenir des pièces en forme, pouvant être massives, complexes, notamment des pièces non planes et de dimensions importantes, ne nécessitant pas de reprise d'usinage en sortie de moulage, aptes à la graphitation et présentant une meilleure homogénéité de leur matériau ainsi qu'une meilleure tenue notamment vis à vis des contraintes mécaniques.

A cet effet, l'invention a pour objet un procédé de fabrication de pièces en forme en matériau composite carbone/carbone graphité, dans lequel on prépare un demi-produit ou compound formé à partir d'une fibre de carbone imprégnée d'une solution aqueuse de précurseurs de carbone, puis sectionnée en tronçons après séchage-calibrage et on place dans un moule les tronçons de fibre imprégnés que l'on soumet alors à une étape de carbonisation par pressage unidirectionnel à chaud, caractérisé en ce que :
- en vue de la préparation dudit compound, on soumet successivement, en continu et avant ledit séchage-calibrage, ladite fibre à un traitement thermique préparatoire de désensimage et désoxydation, puis à un ensimage par imprégnation dans un bain contenant des solvants et liants pour augmenter la mouillabilité et l'accrochage de la surface de la fibre, ensuite à une imprégnation par passage dans un bain constitué d'une solution aqueuse de mésophase de brai, de brai à haut rendement et d'un liant,
   puis, on dépose en vrac dans un moule de pressage à chaud à volume constant la quantité calculée nécessaire et suffisante de compound ainsi obtenu, pour remplir exactement le moule en fin de pressage, on procède à ladite carbonisation par pressage à chaud et, enfin, on effectue sur la pièce moulée une graphitation à haute température.

Ce procédé permet tout d'abord, grâce à l'exceptionnelle aptitude au fluage du matériau constitutif du compound, de réaliser par moulage des pièces non planes pouvant avoir des formes complexes et/ou fines telles que des aubes de turbine par exemple.

De plus, les pièces obtenues sont aux dimensions, le moule étant calculé à cet effet et aucun usinage de reprise n'étant à réaliser sur les pièces, un simple ébarbage étant éventuellement nécessaire au droit des plans de joint.

Suivant une autre caractéristique intéressante des pièces ainsi obtenues, la conjonction d'un placement en vrac dans le moule de tronçons de fibre imprégnés de longueur appropriée pouvant être supérieure à la section locale du moule et de la remarquable plasticité du compound conduit à l'obtention d'architectures fibreuses avec une orientation préférentielle des fibres le long des surfaces conservant néanmoins une composante non nulle d'orientation desdites fibres dans l'axe de pressage.

Par ailleurs, suivant encore une autre caractéristique intéressante de telles pièces, leur matériau constitutif présente une très bonne homogénéité, tant au point de vue macroscopique, qu'au point de vue microscopique.

En effet, la possibilité d'utilisation de fibres à nombre de filaments relativement faible et de découpe de tronçons de fibre de faible longueur, de l'ordre de quelques millimètres, donne au matériau un grain de taille réduite, le terme grain désignant le volume unitaire défini par un tronçon de fibre du matériau, l'ensemble des grains pressés et plus ou moins enchevêtrés définissant l'ensemble de la pièce moulée.

Quant au plan microscopique, on n'observe dans le matériau composite aucune zone de matrice seule, c'est-à-dire sans fibre, ni aucune macro-porosité, les pores étant de très petites tailles.

Le procédé se prête très facilement à une mise en oeuvre industrielle, car il assure la préparation d'un compound en continu et la réalisation de pièces par une seule opération de pressage à chaud aux formes et dimensions de la pièce finie, sans usinage, suivie d'un traitement thermique traditionnel de graphitation.

Il est à noter à ce propos que le procédé permet de mouler plusieurs pièces au cours d'un même pressage et que la graphitation, réalisée dans un four indépendant, peut être appliquée à un ensemble de pièces, semblables ou non.

D'autre caractéristiques et avantages ressortiront de la description qui va suivre d'un mode de mise en oeuvre du procédé de l'invention, description donnée à titre d'exemple uniquement et en regard des dessins annexés sur lesquels :
- Figure 1 est un schéma illustrant l'étape de fabrication du compound du procédé de l'invention ;
- Figure 2 est une vue schématique en coupe verticale axiale d'un moule à pressage indirectionnelle en position de fermeture pour la réalisation d'un vis à tête hexagonale en matériau composite selon le procédé de l'invention, et
- Figures 3a et 3b sont des schémas illustrant le placement des tronçons de fibre dans un moule respectivement avant et après pressage.

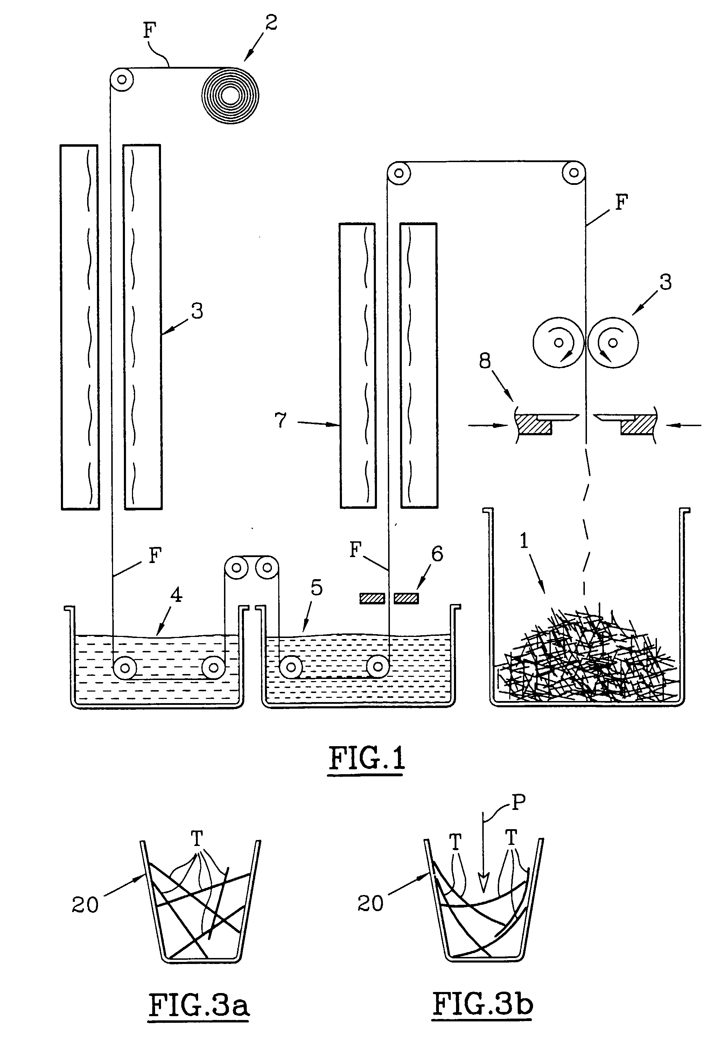

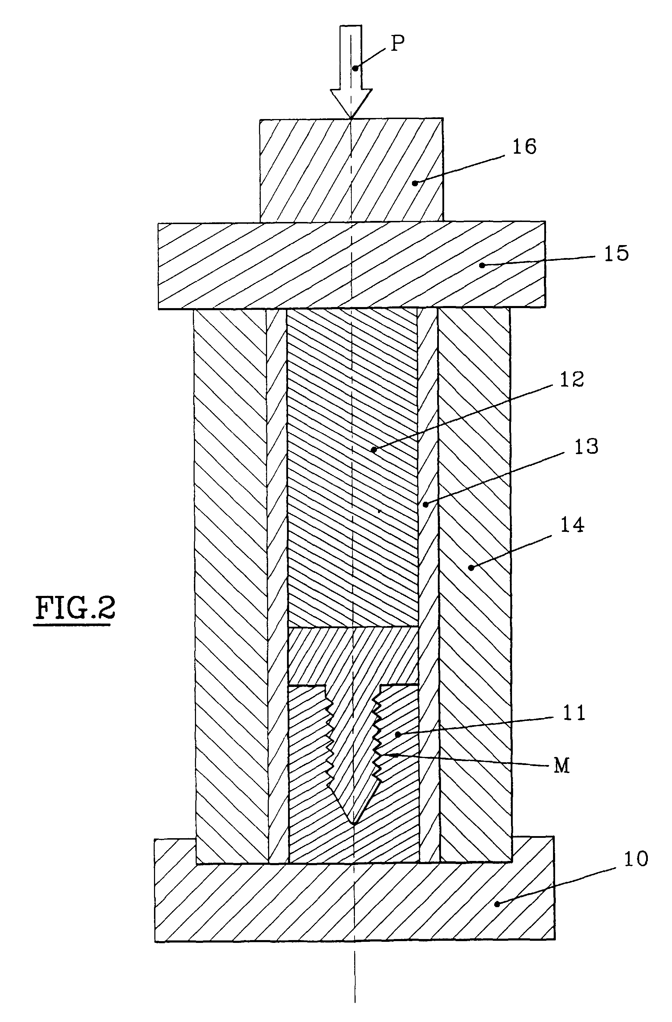

Comme illustré schématiquement par la figure 1, la première étape du procédé de l'invention est l'élaboration en continu d'un demi-produit ou compound 1 constitué de tronçons de fibre de carbone imprégnés, à partir d'une fibre continue stockée en bobine 2 et dévidée en continu à l'aide d'un dévidoir à frein conventionnel (non représenté).

La fibre de carbone de départ est par exemple une fibre comportant 500 filaments commercialisée sous la référence T300 par la société TORAY.

Elle est dévidée de la bobine 2 sous une tension appropriée par un dispositif symbolisé en 3 disposé à l'aval de la chaîne de traitement de la fibre, des poulies de renvoi étant disposées aux endroits nécessaires le long du trajet de la fibre désignée par la référence F.

Dans une étape préparatoire, la fibre F est désensimée et désoxydée par un traitement thermique conventionnel réalisé dans un four symbolisé en 3.

La fibre F est traitée au défilé dans le four sous atmosphère neutre 3 dont elle sort à la température ambiante, débarrassée de son ensimage d'origine et désoxydée. Le four 3 est par exemple du type décrit dans le document FR-A-2.684.097. Pour plus de détails sur le fonctionnement de ce four, on pourra se reporter utilement audit document.

Après passage dans le four 3, la fibre F plonge dans un bain d'ensimage 4 constitué d'une solution aqueuse contenant des solvants et liants aptes à conférer à la surface de la fibre la meilleure mouillabilité et le meilleur accrochage possibles.

Par exemple, la solution d'ensimage 4 est une solution aqueuse contenant 0,5 % en poids d'alcool polyvinylique et 0,5 % en poids de polyéthylène-glycol et présentant un pH entre 4 et 5.

Après imprégnation dans le bain 4, la fibre subit une imprégnation dans un bain 5 constitué d'une solution aqueuse de mésophase de brai, de brai à haut rendement et d'un liant.

De préférence, la solution aqueuse comprend, pour 100 parties en poids d'eau, 90 parties en poids de mésophase de brai, 10 parties en poids de brai à haut rendement et 6 parties en poids d'alcool polyvinylique, la solution ayant un pH compris entre 4 et 5.

Le mésophase de brai est par exemple du type des poudres mentionnées dans la publication "Carbon, Vol. 32, N° 6, pp 1035-1044, 1994", cependant que le brai à haut rendement en carbone (supérieur à 90%) est par exemple du type des brais anisotropes mentionnés dans la publication "Carbon, Vol. 32, N° 1, pp 61-70, 1994".

En sortie du bain 5, la fibre F subit une pultrusion de calibrage par passage, à la manière connue, dans une filière ou diaphragme 6.

A la sortie de la filière 6, la fibre F passe dans un tunnel de séchage 7.

Le dispositif 3 entraîne la fibre F à une vitesse continue appropriée à la tension désirée et aux temps de séjour désirés dans les tunnels 3, 7 et les bains 4, 5.

En aval du dispositif d'entraînement 3, la fibre F est sectionnée par des couteaux 8 entraînée à une cadence appropriée, constante pour avoir des tronçons de même longueur (de quelques millimètres à quelques dizaines de millimètres par exemple) ou variable, si l'on veut obtenir un compound 1 à tronçons de différentes longueurs.

Le compound est ensuite placé en vrac dans un moule en graphite à pressage uniaxial à volume constant et à chaud. Dans ce type de moule, en position fermée du moule, c'est-à-dire en fin de pressage, la pièce moulée est aux formes et dimensions de la pièce finale en sorte qu'aucun usinage n'est nécessaire en sortie de moule.

Ce moule nécessite d'avoir un remplissage correct, c'est-à-dire de calculer de manière précise la quantité de matériau à mouler nécessaire et suffisante pour remplir exactement le moule.

La figure 2 illustre la réalisation, conformément au procédé de l'invention, d'un pièce M en matériau composite carbone/carbone en l'occurrence une vis à tête hexagonale, à partir du compound 1, dans un moule du type ci-dessus, représenté en position fermée.

Le moule comprend, classiquement, une embase 10, une forme monobloc 11, un piston 12, une chemise cylindrique 13, une frette 14, une cale de butée 15 et une cale de poussée 16 recevant la force de pressage unidirectionnelle P exercée par une presse à chaud non représentée.

La cavité de moulage définit en position fermée du moule la pièce M aux cotes désirées, excepté un léger surdimensionnement donné au moule pour tenir compte du retrait, relativement faible, de la pièce lors de la graphitation ultérieure.

Cette cavité est délimitée par la forme 11, la chemise 13 et le piston 12.

Le compound 1 réalisé conformément aux processus illustré en figure 1, en quantité calculée comme indiqué plus haut pour remplir exactement ladite cavité de moulage en position fermée du moule, est versé en vrac dans l'espace délimité par la forme 11 et la chemise 13, les pièces 12, 15 et 16 étant enlevées.

Le piston 12 est ensuite engagé dans la chemise 13, les cales 15 et 16 sont mises en place et l'on effectue un cycle conventionnel de pressage à chaud au cours duquel la température est portée jusqu'aux alentours de 1200°C, la pression P étant de l'ordre de 15 MPa.

Au démoulage, la pièce M ne nécessite pas d'usinage, les fibres conservant donc leur intégrité. Un simple ébarbage peut éventuellement être nécessaire au droit des plans de joint, par exemple à hauteur des arêtes hexagonales supérieure et inférieure de la tête de la vis M.

A titre indicatif, la pièce M présente une densité de 1,5 avec un pourcentage de fibres en volume de 30 %

La remarquable aptitude au fluage du compound 1, conférée notamment par la présence de brai à haut rendement, permet le remplissage aisé et complet des parties ou recoins de la cavité de moulage les plus pointus, étroits, complexes ou tortueux. C'est le cas par exemple des filets de la vis M et de la pointe.

Les tronçons de fibre imprégnés composant le compound ont par exemple une même longueur pouvant être sensiblement supérieure à la section du moule.

Sur les figures 3a et 3b, on a schématisé le comportement général de tels tronçons au cours du pressage.

Sur ces figures, on a schématisé en 20 une cavité de moulage dans laquelle sont jetés en vrac quelques tronçons de fibre imprégnés T de même longueur, orientés dans différentes directions. La longueur des tronçons T est supérieure à la section du moule 20 transversalement à la direction de pressage P, au moins dans la partie inférieure dudit moule.

L'application de la force de pressage P a tendance à déformer les tronçons T de manière à s'aligner préférentiellement parallèlement aux parois du moule 20, tout en conservant néanmoins de manière substantielle une composante directionnelle d'orientation transversalement au pressage P. C'est ce que l'on observe dans la pièce M dans laquelle les renforts fibreux participeront également à la reprise des efforts qui seront exercés sur la pièce suivant son axe, lequel correspond à l'axe de pressage.

En variante et selon le type de pièce à réaliser, plusieurs longueurs de tronçons de fibre imprégnés peuvent être prévus dans le compound de départ.

La taille des tronçons peuvent varier par exemple de quelques millimètres à plusieurs dizaines de millimètres, selon les dimensions et la géométrie de la pièce à réaliser, ainsi que les propriétés mécaniques recherchées pour cette pièce. D'une manière générale, plus les tronçons seront longs, meilleur sera le renfort mécanique. Les grandes souplesse et déformabilité des tronçons du compound de l'invention permettent, même pour des petites pièces, d'utiliser des fibres de longueur importante, bien supérieure à la section locale de la pièce.

Par ailleurs, le matériau de la pièce M est remarquablement homogène.

Au plan macroscopique, la taille des grains, c'est-à-dire le volume unitaire constitué par chaque tronçon, quelle que soit sa configuration, les tronçons étant d'une manière générale collés et enchevêtrés les uns dans les autres de façon aléatoire et sans rupture de la fibre, est réduite et peut l'être d'autant plus que l'on utilisera des fibres F à nombre de filaments réduit.

Au plan microscopique, on n'observe pas dans ledit matériau de zone de matrice seule, c'est-à-dire sans fibre. Par ailleurs, les pores, observés en surface, sont de petite taille (environ 5 000/cm²) et aucune macro-porosité n'est observée dans la masse.

Un traitement ultérieur conventionnel de graphitation de la pièce M, sous haute température, pouvant atteindre par exemple 2400°C, permet ainsi l'obtention d'une pièce présentant une densité suffisante pour lui conférer des propriétés mécaniques remarquables, notamment de résistance à des contraintes thermodynamiques très élevées.

Le procédé de l'invention est ainsi apte à la réalisation de pièces en matériau composite carbone/carbone haute performance de forme et dimensions variables, plus ou moins complexes, planes ou non planes, telles que disques de frein, aubes de turbines, ailerons, bords d'attaque, etc... ainsi que toutes pièces sujettes à frictions.

Le procédé se prête particulièrement bien à une mise en oeuvre industrielle, car il se limite à trois opérations dissociées, dont la première est la préparation en continu d'un compound dont la calibration (longueur, diamètre) des tronçons de fibre imprégnés peut être aisément réglée, la seconde, un pressage à chaud aux formes de la pièce finie, sans usinage et la troisième, un traitement thermique de graphitation.

Pour de grosses quantités de compound, on peut opérer sur plusieurs lignes en sorte d'avoir une fabrication en continu. Il est également possible de mouler plusieurs pièces au cours d'un même pressage et de graphiter également plusieurs pièces simultanément. L'ensemble de ces diverses possibilités aboutissent à des réductions de coût sensibles.

Il est enfin à noter que le procédé s'applique à tout type de fibre de carbone et que les compositions des bains d'imprégnation décrits plus haut sont essentiellement données à titre d'exemple et que l'on peut éventuellement s'en éloigner légèrement qualitativement et/ou quantitativement dans la mesure où l'on observe substantiellement les mêmes effets.

## Revendications

1. Procédé de fabrication de pièces en forme en matériau composite carbone/carbone graphité, dans lequel on prépare un demi-produit ou compound (1) formé à partir d'une fibre de carbone (F) imprégnée d'une solution aqueuse de précurseurs de carbone, puis sectionnée en tronçons après séchage-calibrage et on place dans un moule les tronçons de fibre imprégnés que l'on soumet alors à une étape de carbonisation par pressage unidirectionnel à chaud, caractérisé en ce que :
- en vue de la préparation dudit compound (1), on soumet successivement, en continu et avant ledit séchage-calibrage, ladite fibre (F) à un traitement thermique préparatoire (3) de désensimage et désoxydation, puis à un ensimage par imprégnation dans un bain (4) contenant des solvants et liants pour augmenter la mouillabilité et l'accrochage de la surface de la fibre, ensuite à une imprégnation par passage dans un bain (5) constitué d'une solution aqueuse de mésophase de brai, de brai à haut rendement et d'un liant,
puis, on dépose en vrac dans un moule de pressage à chaud à volume constant (10 à 16) la quantité calculée nécessaire et suffisante de compound (1) ainsi obtenu pour remplir exactement le moule en fin de pressage, on procède à ladite carbonisation par pressage à chaud et, enfin, on effectue sur la pièce moulée une graphitation à haute température.

2. Procédé suivant la revendication 1, caractérisé en ce que ledit bain d'ensimage (4) est une solution aqueuse contenant 0,5 % d'alcool polyvinylique, 0,5 % de polyéthylène-glycol et présente un pH compris entre 4 et 5.

3. Procédé suivant la revendication 1 ou 2, caractérisé en ce que ledit bain d'imprégnation (5) est une solution aqueuse contenant, pour 100 parties en poids d'eau, 90 parties en poids de mésophase de brai, 10 parties en poids de brai à haut rendement et 6 parties en poids d'alcool polyvinylique et présentant un pH compris entre 4 et 5.

4. Pièces en matériau composite carbone/carbone haute performance obtenues conformément au procédé selon l'une quelconque des revendications 1 à 3, caractérisées en ce qu'elles sont de forme massive et/ou complexe, et ont une architecture fibreuse avec une orientation préférentielle des fibres le long des surfaces conservant néanmoins une composante non nulle d'orientation desdites fibres dans l'axe de pressage.

5. Pièces suivant la revendication 4, caractérisées en ce qu'elles comprennent des tronçons de fibres d'une longueur comprise entre quelques millimètres et quelques dizaines de millimètres.

6. Pièces suivant la revendication 4 ou 5, caractérisées en ce qu'elles comprennent des tronçons de fibres de longueur supérieure à la section locale des pièces.

## Claims

1. Method of manufacturing shaped parts made of a graphitized carbon/carbon composite material, in which a half-product or compound (1) is prepared, formed from a carbon fibre (F) impregnated with an aqueous solution of carbon precursors, and then divided into portions after drying and sizing, and the impregnated fibre portions are placed in a mould which is then subjected to a step of carbonisation by hot unidirectional pressing, characterised in that:
- with a view to the preparation of said compound (1), said fibre (F) is subjected successively, continuously and before said drying and calibration, to a preparatory heat treatment (3) of degreasing and deoxidation, and then greasing by impregnation in a bath (4) containing solvents and binders for increasing the wettability and grip of the surface of the fibre, and then to impregnation by passing through a bath (5) consisting of an aqueous solution of mesophase of pitch, high-yield pitch and a binder,
and then, in bulk in a constant-volume hot pressing mould (10 to 16), the necessary and sufficient calculated quantity of compound (1) thus obtained is deposited so as to exactly fill the mould at the end of pressing, said carbonisation is carried out by hot pressing and, finally, high-temperature graphitization is carried out on the moulded part.

2. Method according to Claim 1, characterised in that said greasing bath (4) is an aqueous solution containing 0.5% polyvinyl alcohol and 0.5% polyethylene glycol and has a pH of between 4 and 5.

3. Method according to Claim 1 or 2, characterised in that said impregnation bath (5) is an aqueous solution containing, per 100 parts by weight of water, 90 parts by weight of mesophase pitch, 10 parts by weight of high-yield pitch and 6 parts by weight of polyvinyl alcohol and having a pH of between 4 and 5.

4. Parts made of high-performance carbon/carbon composite material obtained in accordance with methods according to any one of Claims 1 to 3, characterised in that they are solid and/or complex in shape, and have a fibrous architecture with a preferential orientation of the fibres along surfaces nevertheless preserving a non-zero component of orientation of said fibres in the pressing axis.

5. Parts according to Claim 4, characterised in that they comprise portions of fibres with a length of between a few millimetres and several tens of millimetres.

6. Parts according to Claim 4 or 5, characterised in that they comprise portions of fibres with a length greater than the local cross-section of the parts.

## Patentansprüche

1. Verfahren zur Herstellung von Formteilen aus einem Kohlenstoff-/Graphitkohlenstoff-Verbundmaterial, bei dem ein Halbprodukt oder Kompound (1) bereitet wird, der aus einer Kohlenstoffaser (F) gebildet wird, die mit einer wäßrigen Lösung aus Kohlenstoff-Vorläufern imprägniert und dann nach Trocknung-Kalibrierung in Teilstücke unterteilt wird, und die imprägnierten Faser-Teilstücke in einer Form angeordnet und dann einer Karbonisation durch unidirektionales Heißverpressen unterworfen werden, dadurch gekennzeichnet, daß
- für die Vorbereitung des Kompounds (1) die Faser (F) nacheinander kontinuierlich und vor der Trocknung-Kalibrierung einer vorbereitenden thermischen Behandlung (3), zur Entschlichtung sowie Desoxidation und dann einem Schlichten durch Imprägnierung in einem Bad (4), das Lösungs- und Bindemittel enthält, um die Benetzbarkeit und die Oberflächenhaftung der Faser zu erhöhen, und anschließend einer Imprägnierung mittels Durchgang durch ein Bad (5), das aus einer wäßrigen Lösung einer Pech-Mesophase, einem Pech mit hohem Wirkungsgrad und einem Bindemittel gebildet ist, unterworfen wird,
- dann die notwendige und hinreichende berechnete Menge des so erhaltenen Kompounds (1) in loser Schüttung in eine erwärmte Preßform (10 bis 16) mit konstantem Volumen eingebracht wird, um die Form für die Pressung exakt zu füllen, daß die Karbonisation durch Heißverpressen ausgeführt wird und daß schließlich am geformten Teil bei hoher Temperatur eine Graphitisierung durchgeführt wird.

2. Verfahren nach Anspruch 1, dadurch gekennzeichnet, daß das Schlichte-Bad (4) eine wäßrige Lösung ist, die 0,5 % Polyvinylalkohol und 0,5 % Polyethylenglykol enthält und einen pH-Wert zwischen 4 und 5 besitzt.

3. Verfahren nach Anspruch 1 oder 2, dadurch gekennzeichnet, daß das Imprägnierungsbad (5) eine wäßrige Lösung ist, die für 100 Gewichtsteile Wasser 90 Gewichtsteile der Pech-Mesophase, 10 Gewichtsteile Pech mit hohem Wirkungsgrad und 6 Gewichtsteile Polyvinylalkohol enthält und einen pH-Wert zwischen 4 und 5 besitzt.

4. Teile aus einem Kohlenstoff-/Hochleistungskohlenstoff-Verbundmaterial, die gemäß dem Verfahren nach einem der Ansprüche 1 bis 3 erhalten wurden, dadurch gekennzeichnet, daß sie eine massive und/oder komplexe Form besitzen und eine faserige Architektur mit einer bevorzugten Orientierung der Fasern längs der Oberflächen, die dennoch eine von null verschiedene Faserorientierungskomponente längs der Preßachse besitzt, aufweisen.

5. Teile nach Anspruch 4, dadurch gekennzeichnet, daß sie Faserteilstücke mit einer Länge enthalten, die im Bereich von einigen Millimetern bis zu einigen zehn Millimetern liegt.

6. Teile nach Anspruch 4 oder 5, dadurch gekennzeichnet, daß sie Faserteilstücke mit einer Länge enthalten, die größer als der lokale Querschnitt der Teile ist.
